# EUROPÄISCHE PATENTANMELDUNG

(11) **EP 0 870 436 A1**
(43) Veröffentlichungstag der Anmeldung: **14.10.1998**
(21) Anmeldenummer: 98104760.8
(22) Anmeldetag: 17.03.1998
(51) Int. Cl.: A23N 12/00, A01D 33/08, B08B 1/04

(54) **Verfahren zur Reinigung von Rüben sowie Vorrichtung zur Durchführung des Verfahrens**

(30) Priorität: 07.04.1997 DE 19714181
(71) Anmelder: SÜDZUCKER AKTIENGESELLSCHAFT MANNHEIM/OCHSENFURT, D-68165 Mannheim (DE)
(72) Erfinder: Glatter, Norbert, 67591 Offstein (DE); Reinefeld, Arnd, Dr., 67591 Offstein (DE)
(74) Vertreter: Schrell, Andreas, Dr.

(57) **Zusammenfassung**

Die Erfindung betrifft eine Vorrichtung zur Reinigung von Feldfrüchten sowie ein Verfahren zur Reinigung von Feldfrüchten, wobei die Feldfrüchte auf Bürstenwalzen aufgebracht, von diesen befördert und gereinigt werden.

## Beschreibung

Die vorliegende Erfindung betrifft eine Vorrichtung zur Reinigung von Früchten, insbesondere Feldfrüchten wie Rüben, sowie ein Verfahren zur Reinigung der Früchte.

Die Reinigung von Feldfrüchten, insbesondere Rüben, am Feldrand ist bekannt. Aus der DE 41 23 611 C1 ist eine Transport- und Reinigungsvorrichtung für Rüben bekannt. Diese Vorrichtung umfaßt eine um ihre Längsmittelachse in Drehung versetzbare Trommel, wobei das Innere der Trommel eine Förderschnecke aufweist. Die Trommel wird im geschlossenen Zustand zur Erzeugung eines mechanischen Reinigungseffektes bei den in der Trommel befindlichen Früchten um ihre Längsmittelachse gedreht.

Aus der DE 19 28 357 A1 ist ebenfalls eine Förder- und Reinigungsvorrichtung für Rüben bekannt. Diese weist eine Förderkette mit Querleisten auf, auf der Rüben unterhalb einer darüber angeordneten Reinigungskette gefördert werden.

Die bekannten Rübenreinigungsvorrichtungen weisen den Nachteil auf, daß die Rüben wahrend der Reinigung leicht beschädigt werden können. Dies rührt unter anderem daher, daß der auf die Rüben ausgeübte Reinigungsdruck durch externe Faktoren, wie beispielsweise die Drehgeschwindigkeit der Trommel gemäß der DE 41 23 611 C1 oder den Druck der Reinigungskette gemäß der DE 19 28 357 A1, bestimmt wird.

Der vorliegenden Erfindung liegt demgemäß das technische Problem zugrunde, eine Vorrichtung und ein Verfahren zum Reinigen von Früchten, insbesondere Rüben, bereitzustellen, das die vorgenannten Nachteile überwindet, insbesondere die Früchte in einfacher, schonender und effizienter Weise reinigt.

Die Erfindung löst dieses technische Problem durch die Bereitstellung einer Vorrichtung gemäß Hauptanspruch sowie eines Verfahrens zur Reinigung von Rüben gemäß Anspruch 18.

Die Erfindung stellt insbesondere eine Vorrichtung zum Reinigen von Früchten, insbesondere Rüben, mit einem im wesentlichen zylindrischen oder mehreckigen Gehäuse mit zwei Gehäusestirnwänden, vorzugsweise kombiniert mit jeweils einer Rübenzuführ- und einer Rübenaustragsvorrichtung, bereit, wobei im Inneren des Gehäuses eine im wesentlichen über die gesamte axiale Länge des Gehäuses verlaufende Früchteauflageeinrichtung angeordnet ist, wobei die Früchteauflageeinrichtung aus mindestens zwei parallel zueinander und dicht nebeneinander angeordneten Bürstenwalzen aufgebaut ist. Die Erfindung sieht also vor, daß die mindestens zwei Bürstenwalzen so ausgebildet sind, daß sie der Auflage, dem Transport und der Reinigung der Früchte dienen. Die erfindungsgemäße Vorrichtung zum Reinigen von Früchten ist dadurch ausgezeichnet, daß die zu reinigenden Früchte auf den Bürsten zu liegen kommen und an diesen gereinigt werden. Die Transportebene der Früchte liegt somit oberhalb der Ebene, in der die Transport- und Reinigungsbürsten liegen. Die erfindungsgemäße Vorrichtung weist somit den Vorteil auf, daß der auf den Früchten lastende Reinigungsdruck nur durch das Eigengewicht der Früchte bestimmt wird. Die Früchte werden durch die Umdrehungen der Bürsten mitgedreht und somit an allen Seiten gereinigt.

Im Zusammenhang mit der vorliegenden Erfindung ist unter einer dicht nebeneinander liegenden Anordnung der Bürstenwalzen eine Anordnung zu verstehen, in der die Bürsten der nebeneinander liegenden Bürstenwalzen miteinander im Eingriff stehen, die Umfänge der Bürsten aneinander angrenzen oder die Bürstenwalzen maximal so weit voneinander entfernt sind, daß, unter Berücksichtigung der notwendigen Vorwärtsbewegung und Reinigung der Rüben sowie eventuell zwischen den Bürstenwalzen vorhandener Tragelemente, die Früchte nicht zwischen die Bürstenwalzen fallen oder dort verklemmen können.

Im Zusammenhang mit der vorliegenden Erfindung wird unter der Transportebene der Früchte eine gedachte Fläche verstanden, in der die geometrischen Mittelpunkte der meisten auf der Früchteauflageeinrichtung zu einem gegebenen Zeitpunkt beförderten Früchte liegen beziehungsweise um deren Niveau die geometrischen Mittelpunkte der Früchte im wesentlichen normal verteilt schwanken.

Im Zusammenhang mit der vorliegenden Erfindung wird unter einer Bürstenwalze eine um ihre Längsachse drehbare Einrichtung, beispielsweise eine Walze, Schnecke, Rohr oder Zylinder mit beispielsweise kreisförmigem oder ovalem Querschnitt verstanden, die eine eine mechanische Reinigung der Früchte ermöglichende Vorrichtung, zum Beispiel eine Bürste oder Noppen, aufweist.

Im Zusammenhang mit der vorliegenden Erfindung werden unter Früchten insbesondere Feldfrüchte, wie Rüben, Kartoffeln, Möhren, Zwiebeln, Kohl, Melonen, Kürbisse oder Obst, wie Äpfel und Birnen, verstanden.

Im Zusammenhang mit der vorliegenden Erfindung wird unter einem Gehäuse ein beliebig, beispielsweise zylindrisch oder polygonal, ausgebildeter, gegebenenfalls nach oben und/oder unten offener Behälter verstanden, der der Aufnahme der erfindungsgemäß vorgesehenen Bürstenwalzen zur Auflage, Förderung und Reinigung der Früchte dient. Das Gehäuse weist vorteilhafterweise zwei Gehäusestirnwände, zwei Seitenwände sowie gegebenenfalls einen Deckel auf. Gegebenenfalls kann in dem Gehäuse auch ein Boden vorgesehen sein, dem eine Austragseinrichtung für die abgebürstete Erde zugeordnet ist. Das Gehäuse kann gegebenenfalls in bevorzugter Weise durch Verschwenken oder Abnahme eines oder mehrerer Gehäuseteile nach oben und/oder unten geöffnet werden.

Innerhalb des Gehäuses ist im wesentlichen über die gesamte axiale Länge des Gehäuses eine Auflageeinrichtung für die zu reinigenden Früchte angeordnet. Im Zusammenhang mit der vorliegenden Erfindung wird unter einer Auflageeinrichtung für Früchte eine Einrichtung verstanden, auf der sich die Früchte während des Reinigungs- und Transportvorgangs befinden. Die Auflageeinrichtung wird gemäß der vorliegenden Erfindung aus mindestens zwei Bürstenwalzen gebildet, wobei gegebenenfalls vorgesehen sein kann, die Bürstenwalzen in oder oberhalb eines optional vorhandenen Rostes anzuordnen. Die Erfindung sieht auch vor, daß die Vorrichtung in ihrem Abstand zueinander variabel einstellbare Bürstenwalzen aufweist, so daß beispielsweise Früchte unterschiedlicher Größe effizient mit ein- und derselben Vorrichtung gereinigt werden können.

Die Erfindung sieht in einer besonders bevorzugten Ausführungsform vor, daß die mindestens zwei Bürstenwalzen drehbar gelagert sind, insbesondere motorisch drehbar gelagert sind. In einer weiteren besonders bevorzugten Ausführungsform sind die Bürstenwalzen mit zumindest einem ihrer Enden in zumindest einer der Gehäusestirnwände gelagert.

Die Erfindung sieht in einer bevorzugten Ausführungsform vor, daß eine bevorzugt vorgesehene Rübenaustragsvorrichtung an der dem Motor abgewandten Ende des Gehäuses angeordnet ist. Eine ebenfalls bevorzugt vorgesehene Rübenzuführvorrichtung ist vorteilhafterweise an dem dem Motor zugewandten Ende des Gehäuses angeordnet.

Die Erfindung sieht in einer besonders bevorzugten Ausführungsform vor, daß die Bürsten auf den mindestens zwei Bürstenwalzen jeweils schneckenförmig über im wesentlichen die gesamte Länge der Bürstenwalzen umlaufend angeordnet sind. Dadurch wird eine Fortbewegung der Rüben längs der Längsachse der Bürstenwalzen gewährleistet. In dieser Ausführungsform kann ferner vorgesehen sein, zwischen jeweils zwei Bürstenwalzen mindestens einen, gegebenenfalls höhenverstellbaren, Tragstab anzuordnen. Ferner kann in dieser Ausführungsform der Erfindung in vorteilhafter Weise vorgesehen sein, daß die mindestens zwei Bürstenwalzen in ihrer Drehrichtung gleich oder gegenläufig ausgerichtet sind.

In einer weiteren alternativen Ausführungsform der Erfindung ist vorgesehen, auf mindestens zwei parallel angeordneten und in der gleichen Richtung drehenden Bürstenwalzen Bürstenscheiben und Tragscheiben wechselweise anzuordnen. In dieser Ausführungsform sind die Bürsten also nicht schneckenförmig auf den Bürstenwalzen angeordnet, sondern stellen vielmehr distinkte Elemente, nämlich Bürstenscheiben, dar. Die Erfindung sieht in dieser Ausführungsform vorteilhafterweise vor, daß der äußere Durchmesser der Bürstenscheiben größer als der Durchmesser der Tragscheiben ist. Die Erfindung sieht ferner in dieser Ausführungsform vor, daß die Bürstenwalzen in einem 90° Winkel zur Transportrichtung der Rüben angeordnet sind.

Die Erfindung sieht ferner vor, daß die Bürstenwalzen entweder horizontal oder in schräger Anordnung zur Horizontalen betrieben werden können, wobei in besonders bevorzugter Weise die Rüben von oben nach unten gefördert werden.

In einer weiteren bevorzugten Ausführungsform kann vorgesehen sein, die Fortbewegung der Rüben auf den Bürstenwalzen und/oder in den Zuführ- und Austragsvorrichtungen mit zusätzlichen Beschleunigungswalzen zu beschleunigen. Ferner kann vorgesehen sein, daß die erfindungsgemäße Vorrichtung Wasserzuführ-, Wasserabführ- und Spritzeinrichtungen aufweist, die die Reinigung der Rüben unter Einfluß von Wasser ermöglicht.

Die Erfindung betrifft auch ein Verfahren zur Reinigung von Früchten, insbesondere Rüben, unter Verwendung einer Bürsten aufweisenden Vorrichtung, wobei die Früchte auf die Bürsten aufgebracht, von diesen befördert und gleichzeitig im wesentlichen ganzseitig gereinigt werden.

Weitere vorteilhafte Ausgestaltungen der Erfindung sind den Unteransprüchen zu entnehmen.

Die Erfindung wird anhand der folgenden Ausführungsbeispiele sowie der dazugehörigen Figuren näher erläutert. Die Figuren zeigen:
- Figur 1: eine Seitenansicht der erfindungsgemäßen Vorrichtung,
- Figur 2: eine Ansicht der hinteren Stirnfläche der Vorrichtung der Figur 1,
- Figur 3: eine Seitenansicht mit teilweiser Freilegung der Vorrichtung der Figur 1 in Schrägstellung,
- Figur 4: eine Draufsicht auf die Vorrichtung der Figur 1,
- Figur 5: eine Detailansicht von zwei Bürstenwalzen und einem Tragstab,
- Figur 6: eine Draufsicht auf zwei Bürstenwalzen mit schneckenförmiger Bürstenanordnung und Tragstab,
- Figur 7: eine Seitenansicht der erfindungsgemäßen Vorrichtung in schematischer Darstellung mit zwei Beschleunigungswalzen,
- Figur 8: zwei Bürstenwalzen mit Bürstenscheiben und Tragscheiben einer anderen Ausführungsform der Erfindung,
- Figur 9: einen Schnitt durch die Vorrichtung der Figur 8 und
- Figur 10: einen weiteren Schnitt durch die Vorrichtung der Figur 8.

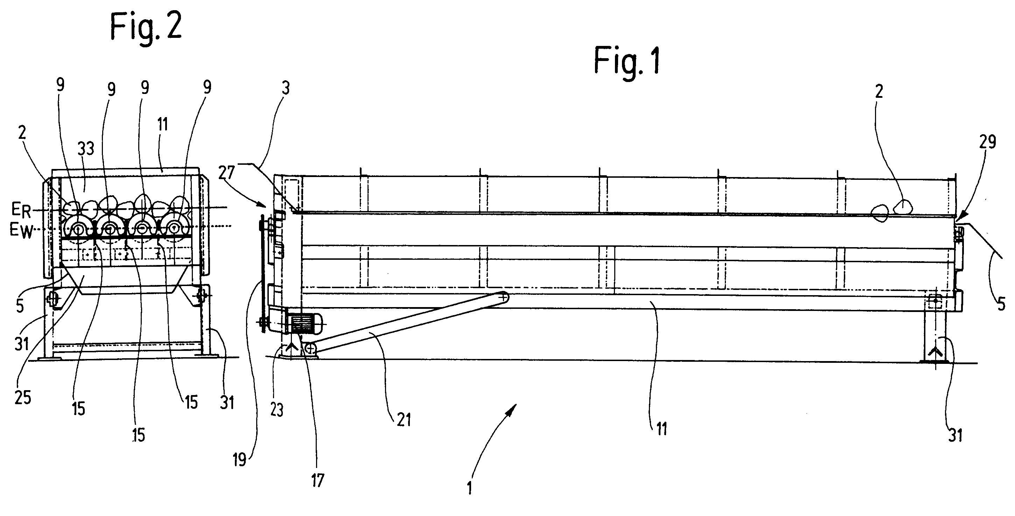

Die Figur 1 zeigt eine Vorrichtung 1 zur Reinigung von Rüben 2. Die Vorrichtung 1 umfaßt ein Gehäuse 11, an dessen vorderer Gehäusestirnwand 27 die als Zulaufschurre ausgeführte Rübenzuführvorrichtung 3 und an deren hinterer Gehäusestirnwand 29 die als Ablaufschurre ausgeführte Rübenaustragsvorrichtung 5 angeordnet ist. Im Bereich der Gehäusestirnwand 27 ist ein Motor 17 angeordnet, der die im Inneren des Gehäuses 11 angeordneten Bürstenwalzen 9 mittels eines Antriebsriemens 19 in Drehung versetzt. Die Vorrichtung 1 befindet sich in horizontaler Stellung, wobei der Stützschenkel 21 nicht hochgeschwenkt ist.

Die Figur 2 stellt eine Ansicht der hinteren Gehäusestirnwand 29 der Vorrichtung 1 dar.

In dem im Querschnitt rechteckigen Gehäuse 11 sind vier dicht nebeneinander, parallel zueinander und horizontal angeordnete Bürstenwalzen 9 positioniert, die das Innere des Gehäuses in einen oberen, die Rüben aufnehmenden Bereich 33 und einen Abraumbereich 25 unterteilen, in welchem die Reinigungsrückstände anfallen. Die Längsachsen der Bürstenwalzen 9 sind in einer Ebene E_{W} angeordnet, können jedoch gegebenenfalls auch leicht versetzt zueinander in verschiedenen Höhenniveaus angeordnet sein, so lange eine effiziente Reinigung und Transport der darauf befindlichen Früchte möglich ist. Zwischen den Bürstenwalzen 9 befindet sich jeweils ein Tragstab 15, der verhindert, daß die auf den Bürstenwalzen 9 transportierten Rüben 2 zwischen den Bürstenwalzen 9 festklemmen oder durchfallen. Dargestellt sind ferner die hinteren Stützarme 31, die zusammen mit den nicht dargestellten vorderen Stützarmen 23 das Gehäuse 11 tragen sowie die Rübenaustragsvorrichtung 5. Das Gehäuse 11 ist nach oben und unten offen, daß heißt weist weder Deckel noch Boden auf. Dargestellt ist ferner die Transportebene E_{R} der Rüben, die oberhalb der Ebene E_{W} liegt. Der Figur 2 ist deutlich zu entnehmen, daß die Rüben 2 auf den Bürstenwalzen 9 liegen.

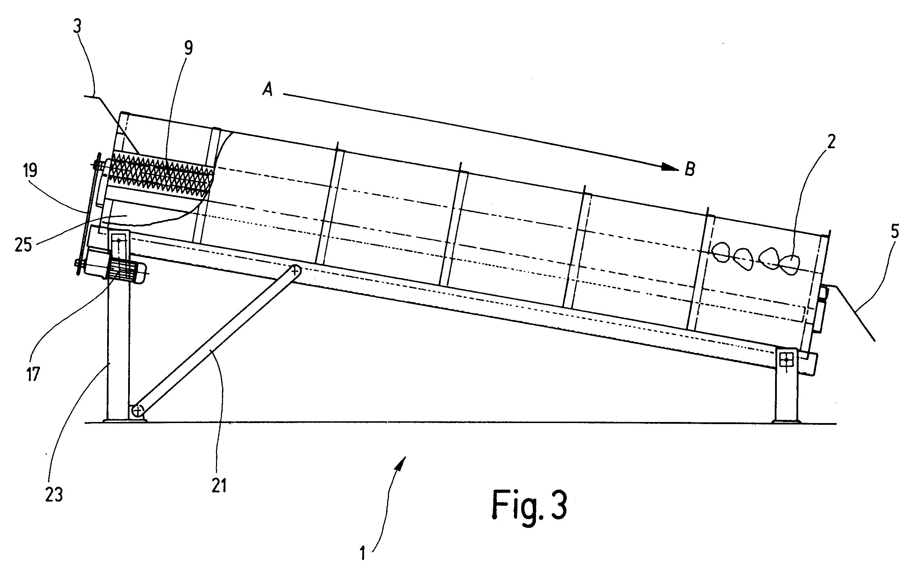

Die Figur 3 stellt eine Seitenansicht mit teilweiser Freilegung der Vorrichtung 1 in maximaler Schrägstellung dar. Der Stützschenkel 21 ist hochgeklappt, so daß der die Rübenzuführvorrichtung 3 aufweisende Teil des Gehäuses 11 oberhalb des die Rübenaustragsvorrichtung 5 aufweisenden Bereichs des Gehäuses 11 angeordnet ist. Es ergibt sich eine Schrägstellung des Gehäuses 11 und somit der Bürstenwalzen 9 gegenüber der Horizontalen. Im oberen Bereich des Gehäuses 11 ist in Freilegung eine Bürstenwalze 9 dargestellt.

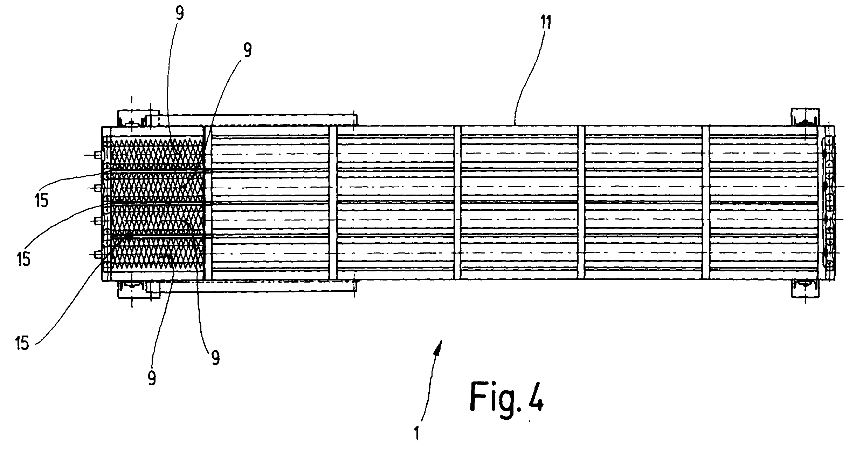

Die Figur 4 stellt die erfindungsgemäße Vorrichtung 1 in Draufsicht dar, wobei in teilweiser Freilegung die vier dicht nebeneinander und parallel zueinander angeordneten Bürstenwalzen 9 sowie drei zwischen den Bürstenwalzen 9 angeordnete Tragstäbe 15 zu erkennen sind.

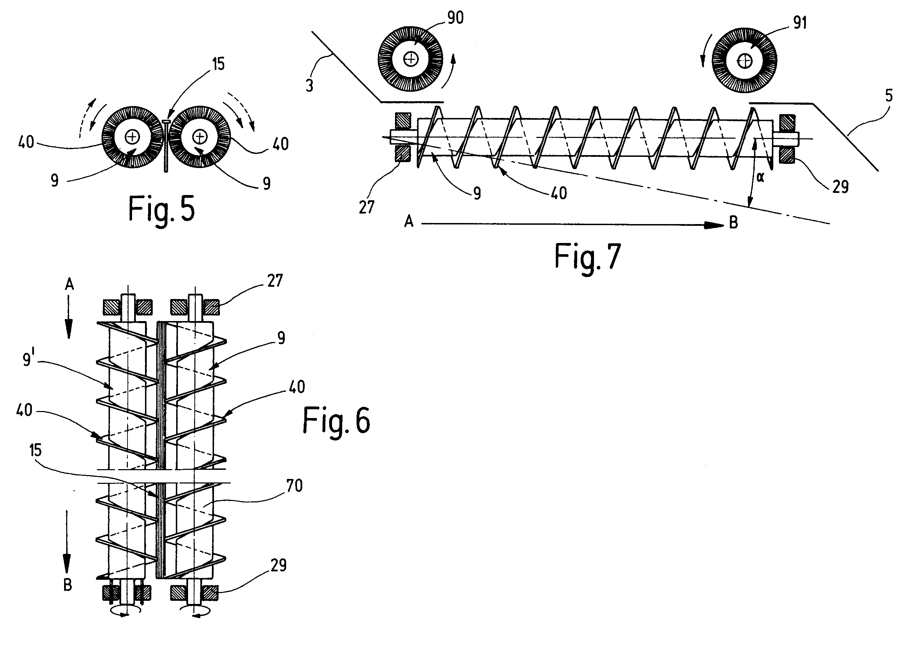

Die Figur 5 stellt in Detailansicht zwei dicht nebeneinander angeordnete Bürstenwalzen 9 und einen dazwischen angeordneten Tragstab 15 dar. Die Bürstenwalzen 9 tragen jeweils eine schneckenförmig angeordnete Bürste 40. Die Figur 5 verdeutlicht ferner, daß die Bürstenwalzen 9 in dieser Ausführungsform der Erfindung sowohl in der gleichen Richtung (gestrichelte Pfeile) als auch gegenläufig (durchgezogene Pfeile) drehen können.

Die Figur 6 stellt in schematischer Draufsicht zwei Bürstenwalzen 9 und einen Tragstab 15 der erfindungsgemäßen Vorrichtung 1 dar. Die Bürstenwalzen 9 sind sowohl in der vorderen Gehäusestirnwand 27 als auch in der hinteren Gehäusestirnwand 29 des Gehäuses 11 drehbar gelagert. Auf den Bürstenwalzen 9 sind über deren gesamte Länge jeweils eine Bürste 40 schneckenförmig umlaufend angeordnet. Die in der Figur 6 dargestellte rechte Bürstenwalze 9 weist, in der Rübentransportrichtung A zu B gesehen, ein Rechtsgewinde der schneckenförmigen Bürste 40 auf.

Die Bürstenwalze 9 dreht sich -in Richtung A zu B gesehen- entgegen dem Uhrzeigersinn. Die in der Figur 6 links dargestellte Bürstenwalze 9' weist, in der Transportrichtung A zu B gesehen, ein Linksgewinde der schneckenförmig angeordneten Bürste 40 auf. Diese Bürstenwalze 9' wird im Uhrzeigersinn gedreht. Selbstverständlich sind auch andere Kombinationen von Gewindeorientierung, Geometrie und Drehrichtung der Bürstenwalzen möglich. Beispielsweise kann bei gleicher Drehrichtung der Bürstenwalzen die gleiche Gewindeorientierung oder bei entgegengesetzter Drehrichtung eine entgegengesetzte Gewindeorientierung vorgesehen sein. Es kann auch vorgesehen sein, in den Schneckenumgängen 70 auf der Bürstenwalze 9 kleinere Bürsten oder Noppen zur zusätzlichen Reinigung anzuordnen.

Die Figur 7 stellt in schematischer Darstellung eine Seitenansicht der erfindungsgemäßen Vorrichtung 1 dar. Dargestellt ist, daß über der Rübenzuführvorrichtung 3 eine quer und horizontal zur Rübentransportrichtung A zu B angeordnete Beschleunigungswalze 90 angeordnet ist. Diese dreht sich entgegen dem Uhrzeigersinn (durchgezogener Pfeil) und befördert die Rüben 2 aus der Rübenzuführvorrichtung 3 auf die Bürstenwalzen 9. Im Bereich der hinteren Gehäusestirnwand 29 des nicht dargestellten Gehäuses 11 der Vorrichtung 1 befindet sich die Rübenaustragsvorrichtung 5, oberhalb derer und noch im Bereich der Bürstenwalzen 9 eine weitere Beschleunigungswalze 91 quer und horizontal zur Transportrichtung A zu B der Rüben 2 angeordnet ist. Diese Bürstenwalze 91 dreht sich entgegen dem Uhrzeigersinn und befördert die Rüben 2 von den Bürstenwalzen 9 auf die Rübenaustragsvorrichtung 5, so daß diese die Vorrichtung 1 verlassen können.

In der Figur 7 ist ferner dargestellt, daß die Bürstenwalzen 9 sowohl horizontal als auch in einem Winkel α zur Horizontalen angeordnet sein können, was zu einem Gefälle oder gegebenenfalls auch einer Steigung bei der Rübentransportrichtung A zu B führt.

Die Funktionsweise der erfindungsgemäßen Vorrichtung 1 stellt sich wie folgt dar.

Die Rüben 2 werden in die Rübenzuführvorrichtung 3 eingebracht und der Schwerkraft folgend sowie unterstützt durch die Beschleunigungswalze 90 auf die Bürstenwalzen 9 befördert. Aufgrund der Drehung der Bürstenwalzen 9 sowie dem gegebenenfalls vorliegenden Gefälle werden die Rüben 2 von A nach B befördert. Die Rüben 2 liegen dabei auf den Bürsten 40 der Bürstenwalzen 9 (siehe Figur 2). Oberhalb der Bürsten 40 im oberen Bereich 33 des Gehäuses 11 sind keine weiteren Vorrichtungen angeordnet, die, wie im Stand der Technik, Druck auf die Rüben 2 ausüben könnten.

Die auf den Bürsten 40 liegenden Rüben 2 werden an diesen gereinigt. Der Reinigungsdruck wird nur durch das Eigengewicht der Rüben 2 bestimmt und die Rüben 2 werden durch die Umdrehungen der Bürsten mitgedreht und somit von allen Seiten gereinigt. Anschließend werden die Rüben 2, unterstützt durch die Beschleunigungswalze 91, von den Bürstenwalzen 9 in die Rübenaustragsvorrichtung 5 befördert und verlassen gereinigt die Vorrichtung 1.

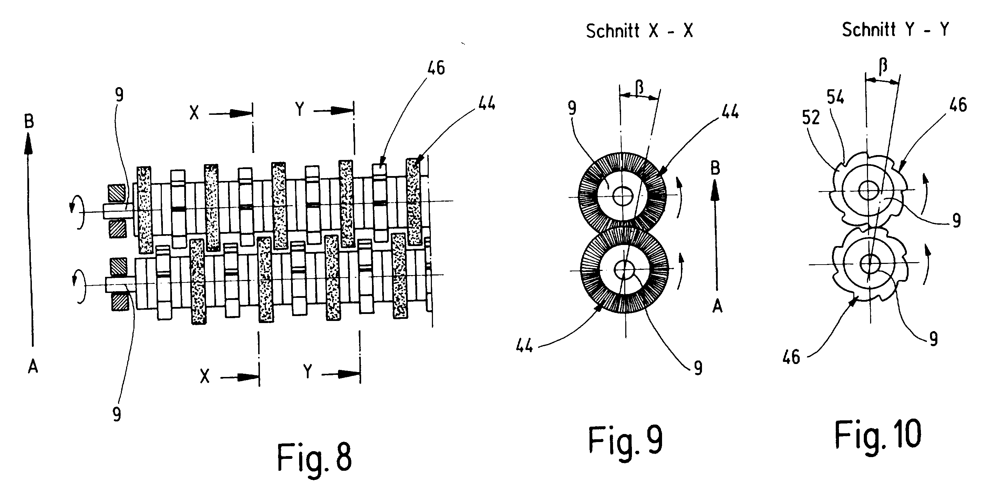

Die Figuren 8 bis 10 stellen eine alternative Ausführungsform der erfindungsgemäßen Vorrichtung dar. Die Bürstenwalzen 9 sind gemäß dieser Ausführungsform quer zur Transportrichtung A zu B der Rüben 2 angeordnet. Die Bürstenwalzen 9 sind parallel zueinander und dicht nebeneinander angeordnet und drehen in der gleichen Richtung (durchgezogener Pfeil). Auf den Bürstenwalzen 9 sind alternierend und beabstandet zueinander Bürstenscheiben 44 und Tragscheiben 46 angeordnet. Die Bürstenscheiben können als über den Umfang der Bürstenwalze verlaufender Bürstenkranz ausgeführt sein. Es kann auch vorgesehen sein, die Bürstenteile als einen auf einem Ring aufgebrachten Bürstenkranz auszuführen. Der äußere Durchmesser der Bürstenscheiben 44 ist größer als der äußere Durchmesser der Tragscheiben 46. Die parallel zueinander angeordneten Bürstenwalzen 9 sind so dicht nebeneinander angeordnet, daß die Bürstenscheiben 44 und Tragscheiben 46 der benachbarten Bürstenwalzen 9 ineinandergreifen, so daß die über die Bürstenwalzen 44 transportierten Rüben 9 nicht in den Zwischenraum zwischen den Bürstenwalzen 9 gelangen und festklemmen oder durchfallen können.

Die Figur 9 stellt einen Schnitt in der Ebene X-X der Vorrichtung gemäß Figur 8 dar. Dargestellt sind die hintereinandergreifenden Bürstenscheiben 44, die in periodischen Abständen entlang der Längsachse der Bürstenwalzen 9 angeordnet sind. Dargestellt ist ferner, daß die Bürstenwalzen 9 horizontal oder unter einem Winkel β zur Horizontalen zueinander angeordnet sein können, so daß sich längs der Transportrichtung A zu B eine Steigung oder gegebenenfalls ein Gefälle ergibt.

Die Figur 10 stellt einen weiteren Schnitt durch die Vorrichtung der Figur 8 in der Ebene Y-Y dar. Dargestellt sind die auf den Bürstenwalzen 9 angeordneten Tragscheiben 46. Auch hier ist ersichtlich, daß die Bürstenwalzen 9 horizontal oder unter einem Winkel β zur Horizontalen zueinander angeordnet sein können. In der Figur 10 wird deutlich, daß die Umfangsflächen der Tragscheiben 46 ein Profil aufweisen, insbesondere ein sägezahnähnliches Profil, mit Erhöhungen 52 und Vertiefungen 54, das eine bessere Beförderung der Früchte ermöglicht.

Die Funktionsweise der in den Figuren 8 bis 10 dargestellten Vorrichtung ähnelt grundsätzlich der in den Figuren 1 bis 7 dargestellten Ausführungsform der Erfindung. In beiden Ausführungsvarianten befinden sich die Rüben 2 auf der als Bürstenwalzen 9 ausgebildeten Rübenauflageeinrichtung und werden von dieser in Transportrichtung befördert. Während der Beförderung werden die Rüben 2 gleichzeitig von allen Seiten gereinigt, wobei der Reinigungsdruck einzig und allein durch das Eigengewicht der Rüben 2 bestimmt wird und keine weiteren Vorrichtungen zur Beförderung oder Reinigung vorgesehen sind. In der Ausführungsvariante der Figuren 1 bis 7 verläuft die Transportrichtung der Rüben A zu B parallel zur Längsachse der Bürstenwalzen 9, während in der Ausführungsvariante gemäß der Figuren 8 bis 10 die Transportrichtung A zu B der Rüben 2 quer und horizontal zur Längsachse der Bürstenwalzen 9 verläuft. Zudem unterscheiden sich die beiden Ausführungsvarianten durch die Anordnung der Bürsten auf der Bürstenwalze sowie der Anordnung der als Tragstäbe oder Tragscheiben ausgeführten Tragelemente.

## Patentansprüche

1. Vorrichtung zum Reinigen von Früchten, insbesondere Rüben, mit einem Gehäuse mit zwei Gehäusestirnwänden, wobei im Inneren des Gehäuses eine im wesentlichen über die gesamte axiale Länge des Gehäuses verlaufende Früchteauflageeinrichtung angeordnet ist, **dadurch gekennzeichnet**, daß die Früchteauflageeinrichtung aus mindestens zwei parallel zueinander und dicht nebeneinander angeordneten Bürstenwalzen (9) aufgebaut ist.

2. Vorrichtung nach Anspruch 1, **dadurch gekennzeichnet**, daß die mindestens zwei Bürstenwalzen (9) so ausgebildet sind, daß sie sowohl dem Transport als auch der Reinigung der auf ihnen zu liegen kommenden Früchte (2) dienen.

3. Vorrichtung nach einem der vorhergehenden Ansprüche, **dadurch gekennzeichnet**, daß die Transportebene (E_{R}) der Früchte (2) oberhalb der Ebene (E_{W}) liegt, in der die Längsachsen der Bürstenwalzen (9) angeordnet sind.

4. Vorrichtung nach einem der vorhergehenden Ansprüche, **dadurch gekennzeichnet**, daß die Vorrichtung einen Motor (17) aufweist und die mindestens zwei Bürstenwalzen (9) motorisch drehbar gelagert sind.

5. Vorrichtung nach einem der vorhergehenden Ansprüche, **dadurch gekennzeichnet**, daß die mindestens zwei Bürstenwalzen (9) motorisch drehbar mit zumindest einem ihrer Enden in zumindest einer der Gehäusestirnwände (27,29) gelagert sind.

6. Vorrichtung nach einem der vorhergehenden Ansprüche, **dadurch gekennzeichnet**, daß dem Gehäuse (11) jeweils eine Früchtezuführ- (3) und eine Früchteaustragsvorrichtung (5) zugeordnet ist.

7. Vorrichtung nach einem der vorhergehenden Ansprüche, **dadurch gekennzeichnet**, daß die Früchteaustragsvorrichtung (5) an dem dem Motor (17) abgewandten Ende des Gehäuses (11) angeordnet ist.

8. Vorrichtung nach einem der vorhergehenden Ansprüche, **dadurch gekennzeichnet**, daß die Früchtezuführvorrichtung (3) an dem dem Motor (17) zugewandten Ende des Gehäuses (11) angeordnet ist.

9. Vorrichtung nach einem der vorhergehenden Ansprüche, **dadurch gekennzeichnet**, daß auf den mindestens zwei Bürstenwalzen (9) Bürsten (40), vorzugsweise im wesentlichen über deren gesamte Länge, schneckenförmig angeordnet sind.

10. Vorrichtung nach einem der vorhergehenden Ansprüche, **dadurch gekennzeichnet**, daß zwischen jeweils zwei Bürstenwalzen (9) mindestens ein Tragstab (15) angeordnet ist.

11. Vorrichtung nach einem der vorhergehenden Ansprüche, **dadurch gekennzeichnet**, daß die mindestens zwei Bürstenwalzen (9) gleichgerichtet oder gegenläufig drehbar gelagert sind.

12. Vorrichtung nach einem der vorhergehenden Ansprüche, **dadurch gekennzeichnet**, daß die Längsachsen der Bürstenwalzen (9) im wesentlichen parallel zur Transportrichtung der Früchte (2) angeordnet sind.

13. Vorrichtung nach einem der Ansprüche 1 bis 8, **dadurch gekennzeichnet**, daß auf den mindestens zwei Bürstenwalzen (9) Bürstenscheiben (44) und Tragscheiben (46) alternierend angeordnet sind.

14. Vorrichtung nach Anspruch 13, **dadurch gekennzeichnet**, daß die Bürstenwalzen (9) gleichgerichtet drehbar angeordnet sind.

15. Vorrichtung nach einem der Ansprüche 13 oder 14, **dadurch gekennzeichnet**, daß der äußere Durchmesser der Bürstenscheiben (44) größer als der äußere Durchmesser der Tragscheiben (46) ist.

16. Vorrichtung nach einem der Ansprüche 13 bis 15, **dadurch gekennzeichnet**, daß die Längsachse der Bürstenwalzen (9) im wesentlichen quer und horizontal zur Transportrichtung der Früchte (2) angeordnet ist.

17. Vorrichtung nach einem der vorhergehenden Ansprüche, **dadurch gekennzeichnet**, daß die durch die räumliche Anordnung der Bürstenwalzen (9) vorgegebene Transportebene (E_{R}) der Früchte (2) horizontal oder unter einem Winkel (α,β) zur Horizontalen angeordnet ist.

18. Verfahren zur Reinigung von Früchten, insbesondere Rüben, mittels einer Bürsten aufweisenden Vorrichtung zur Reinigung von Früchten, insbesondere nach einem der vorhergehenden Ansprüche, wobei die Früchte (2) auf die Bürsten (40,44) der Vorrichtung (1) aufgebracht, von den sich drehenden Bürsten (40,44) in Transportrichtung befördert, dabei durch die Umdrehung der Bürsten (40,44) mitgedreht und so von allen Seiten gereinigt werden.
